Europäisches Patentamt

European Patent Office

Office européen des brevets

(11) Veröffentlichungsnummer: **0 321 598**
**A1**

# EUROPÄISCHE PATENTANMELDUNG

(21) Anmeldenummer: 87119027.8

(22) Anmeldetag: 22.12.87

(51) Int. Cl.4 **B23P 19/00 , B65G 47/06 , //B23K11/32**

(43) Veröffentlichungstag der Anmeldung:
28.06.89 Patentblatt 89/26

(84) Benannte Vertragsstaaten:
**AT BE CH ES FR GB IT LI NL SE**

(71) Anmelder: **EXPERT Maschinenbau GmbH**
**Seehofstrasse 56-58**
**D-6143 Lorsch(DE)**

(72) Erfinder: **Schmidt, Heinz**
**Fliederweg 4**
**D-6141 Einhausen(DE)**

(74) Vertreter: **Helber, Friedrich G., Dipl.-Ing. et al**
**Giesser Weg 47**
**D-6144 Zwingenberg(DE)**

(54) **Vorrichtung zur Vereinzelung und Überführung von mit einem Kopf versehenen bolzenförmigen Werkstücken in ein nachgeschaltetes Montagewerkzeug.**

(57) Vorrichtung zur Vereinzelung von aus einem Vorrat über eine Fördereinrichtung aufeinanderfolgend ausgerichtet zugeführten Kopfbolzen und zur Verteilung in den Einlaß einer nachgeschalteten pneumatischen Förderlinie, in welcher die Kopfbolzen einzeln in die Aufnahme eines zugeordneten Montagewerkzeugs überführt werden.

Ein der Fördereinrichtung nachgeschaltetes starres Verteilerstück (16) mit einem Einlaßschlitz (18) und einem diesem nachgeschalteten querverlaufenden Verteilerschlitz (20), ein auf der Oberseite der Verteilerstücks querverschieblich geführter Vereinzelungsschlitten (30) und ein auf dem Verteilerstück und dem Vereinzelungsschlitten querverschieblich aufgesetzter, durch eine Betätigungseinheit hin und her beweglicher Weichenschlitten (52) sind relativ zueinander derart angeordnet bzw. gekoppelt, daß über den Einlaßschlitz zugeführte Kopfbolzen in den Verteilerschlitz geführt und dort abwechselnd mit an dessen gegenüberlienden Enden vorgesehenen Druckluftkanälen (22) ausgerichtet werden. Durch Zufuhr von Druckluft über die Druckluftkanäle werden die Kopfbolzen über eine Durchgangsbohrung (68) im Weichenschlitten in einen zum Montagewerkzeug führenden Förderschlauch (70) ausgeblasen.

## Vorrichtung zur Vereinzelung und Überführung von mit einem Kopf versehenen bolzenförmigen Werkstücken in ein nachgeschaltetes Montagewerkzeug

Die Erfindung betrifft eine Vorrichtung zur Vereinzelung von aus einem Vorrat über eine Fördereinrichtung aufeinanderfolgend ausgerichtet zugeführten Kopfbolzen und zur Einbringung in den Einlaß einer nachgeschalteten pneumatischen Förderlinie, in welcher die Kopfbolzen einzeln in die Aufnahme eines zugeordneten Montagewerkzeugs überführt werden.

Bei der Serienfertigung von komplexen technischen Produkten stellt sich häufig die Aufgabe der automatisierten Montage von bolzenförmigen Werkstücken, z.B. Schrauben, Nieten o.dgl.. Zu diesem Zweck sind komplexe Vorrichtungen entwickelt worden, mit denen z.B. Schrauben aus einem ungeordneten Vorrat entnommen, sortiert und - gegebenenfalls nach Prüfung auf korrekte Größe - lagerichtig zu den am Montageort vorgesehenen Schraubwerkzeugen gefördert werden (DE-OS 32 26 006). "Lagerichtig" bedeutet in diesem Zusammenhang, daß die Kopfbolzen so in die Aufnahme des Montagewerkzeugs gelangen, daß sie von diesem sogleich, d.h. ohne Umgreifen, montiert werden können. Da bei den bei der automatischen Serienfabrikation verwendeten Schraubwerkzeugen die Schrauben von hinten in die Werkzeugaufnahme geführt werden, bedeutet dies, daß Schrauben mit dem freien Ende des Gewindeschafts voran zugeführt werden müssen. Andererseits sind aber auch Einsatzfälle gegeben, in welchen "lagerichtig" eine Förderung der Kopfbolzen mit vorn liegendem Kopf erfordert. Das ist beispielsweise dann der Fall, wenn Schrauben nicht von rückwärts durch die Aufnahme des Schraubwerkzeugs hindurch zugeführt, sondern von vorn in die Aufnahme eingeführt werden müssen. Ein anderer Einsatzfall ist dann gegeben, wenn es sich bei den Kopfbolzen um sogenannte Anschweißschrauben oder -bolzen handelt, die mit der freien Stirnfläche des Kopfs auf einem metallischen Untergrund aufgedrückt und dann durch Zufuhr eines Schweißstroms in einem Widerstands-Schweißverfahren mit dem Untergrund verbunden werden sollen. Insbesondere für den letzt genannten Fall sind von Industrierobotern geführte automatische Schweißvorrichtungen entwickelt worden, welche in sehr kurzer Taktzeit Anschweißschrauben an die vorgesehene Montagestelle führen und dort verschweißen können.

Der Erfindung liegt daher die Aufgabe zugrunde, eine Vereinzelungsvorrichtung für Kopfbolzen anzugeben, welche die Vereinzelung der zugeführten Kopfbolzen und ihre Überführung in das Montagewerkzeug mit vorauseilendem Kopf mit möglichst hoher Taktrate ermöglicht.

Ausgehend von einer Vorrichtung der eingangs erwähnten Art wird diese Aufgabe erfindungsgemäß gelöst durch ein der Fördereinrichtung nachgeschaltetes starres Verteilerstück mit einem Einlaßschlitz für die zugeführten Kopfbolzen, welcher so bemessen ist, daß jeweils nur ein Kopfbolzen hindurchzutreten vermag, und der mittig in einen querverlaufenden, nur an der Oberseite offenen Verteilerschlitz führt, in dessen gegenüberliegenden Endbereichen bodenseitig Druckluftkanäle in einem vorgegebenen Abstand münden, die abwechselnd gesteuert mit einer Druckluftquelle verbindbar sind, einen auf der Oberseite des Verteilerstücks querverschieblich geführten plattenförmigen Vereinzelungsschlitten mit zwei in Verschiebungsrichtung um das halbe Maß des vorgegebenen Abstands zueinander versetzten, abwechselnd mit dem Einlaßschlitz ausrichtbaren Einlaufschlitzen, in welche bei Ausrichtung mit dem Einlaßschlitz jeweils ein Kopfbolzen übertritt, wobei der Vereinzelungsschlitten einen im Bereich zwischen den Einlaufschlitzen von seiner Unterseite in den querverlaufenden Verteilerschlitz vortretenden und ihn in zwei im wesentlichen dicht gegeneinander abgeschlossene größenveränderliche Räume unterteilenden Vorsprung aufweist, und durch einen auf dem Verteilerstück und dem Vereinzelungsschlitten um einen dem vorgegebenen Abstand entsprechenden Hub querverschieblich aufgesetzten, durch eine Betätigungs-Einheit hin- und herbeweglichen Weichenschlitten mit einer am Ende der Querhübe jeweils mit einem der Druckluftanschlüsse des Bodens des Verteilerschlitzes ausgerichteten Durchgangsbohrung, deren lichter Durchlaßquerschnitt nur geringfügig größer als der Kopfdurchmesser der zu vereinzelnden Kopfbolzen ist, und an welcher auf der vereinzelungsschlittenabgewandten Seite ein Ende eines elastischen Förderschlauchs angeschlossen ist, dessen anderes Ende zum Montagewerkzeug geführt ist, wobei der Vereinzelungsschlitten und der Weichenschlitten durch eine Mitnehmereinrichtung gekoppelt sind, welche jeweils nur während der zweiten Hälfte des Hubes des Weichenschlittens wirksam ist. Es ist also möglich, durch Druckluftbeaufschlagung des Druckluftkanals, der mit dem gerade nicht mit dem Einlaßschlitz des Verteilerstücks ausgerichteten Einlaufschlitz ausgerichtet ist, einen zuvor in diesen Einlaufschlitz eingeführten Kopfbolzen in die Durchgangsbohrung des Weichenschlittens und somit in die Förderleitung zum Montagewerkzeug zu schießen, während gleichzeitig über den Einlaßschlitz der nächstfolgende Kopfbolzen in den zweiten Einlaufschlitz des Vereinzelungsschlittens eintritt. Beim nächstfolgenden Querhub des Weichenschlittens wird dann der zuletzt gefüllte Einlaufschlitz mit der Mündung des bis dahin nicht mit Druckluft beaufschlagten Druckluftkanals ausgerichtet, wobei gleichzeitig wiederum die in der Unterseite des Weichenschlittens mündende Durchgangsbohrung mit dem Einlaufschlitz ausgerichtet wird. Durch Auslösung eines Druckluftstoßes im zweiten Druckluftkanal des Verteilerstücks wird also nunmehr der zweite Kopfbolzen in die pneumatische Förderlinie geschossen, während bereits gleichzeitig wiederum der nächstfolgende Kopfbolzen in den Vereinzelungsschlitten eintritt. Durch das dauernde Hin- und Herschalten des Weichenschlittens wird also abwechselnd jeweils einer der beiden Einlaufschlitze des Vereinzelungsschlittens mit dem Einlaßschlitz im Verteilerstück ausgerichtet, so daß dort ein Kopfbolzen zutreten kann, während der andere Einlaufschlitz mit der Mündung einer der beiden am Boden des Verteilerschlitzes mündenden Druckluftkanäle und gleichzeitig der Mündung der Durchgangsbohrung im Weichenschlitten ausgerichtet wird. Es ist ersichtlich, daß hierdurch eine besonders schnelle Schußfolge von Kopfbolzen erreicht wird, so daß das nachgeschaltete Montagewerkzeug mit einer hohen Taktrate arbeiten kann.

Der plattenförmige Vereinzelungsschlitten ist zweckmäßig auf einer Fläche des Verteilerstücks querverschieblich aufgesetzt, welche um das Maß der Dicke des Vereinzelungsschlittens in die Oberseite des Verteilerstücks vertieft eingesenkt ist, wobei der Einlaßschlitz und die Einlaufschlitze jeweils an ihrem oberen Ende einen entsprechend dem gegenüber dem Durchmesser des Bolzenschafts vergrößerten Kopfdurchmesser der Kopfbolzen verbreiterten Schlitzabschnitt aufweisen, dessen Höhe gleich oder etwas größer als die Höhe des Kopfs der zu vereinzelnden Kopfbolzen ist. Die Oberseite des Verteilerstücks und des Vereinzelungsschlittens liegen in der bestimmungsgemäßen Montagelage also in der gleichen Ebene, so daß die Unterseite des aufgesetzten Weichenschlittens in der auf dem Verteilerstück und dem Vereinzelungsschlitten liegenden Bereich ebenfalls eben ausgebildet werden kann.

Da die Überführung der Kopfbolzen aus der Vorrichtung in das nachgeschaltete Montagewerkzeug durch Druckluft erfolgt, d.h. Druckluft ohnehin zur Verfügung steht, wird die Betätigungs-Einheit zweckmäßig als einerseits am Weichenschlitten und andererseits an einem starr mit dem Verteilerstück verbundenen Bauteil angeschlossene doppelt wirkende pneumatische Kolben-Zylinder-Einheit ausgebildet.

Die Steuerung der Druckluftbeaufschlagung der Vorrichtung zur Überführung der Kopfbolzen über den elastischen Förderschlauch der Förderlinie in das nachgeschaltete Montagewerkzeug erfolgt zweckmäßig dadurch, daß in die die im Boden des Verteilerschlitzes des Verteilerstücks mündenden Druckluftkanäle mit der Druckluftquelle verbindenden Druck luftleitungen je ein im Ausgangszustand in der Schließstellung gehaltenes, durch ein elektrisches Signal in die Öffnungsstellung umsteuerbares Absperrorgan eingeschaltet ist, und daß dem Weichenschlitten oder dem Vereinzelungsschlitten in beiden Hubendstellungen je ein Annäherungsschalter zugeordnet ist, der bei Erreichen der jeweiligen Hubendstellung das elektrische Signal für das Absperrorgan entwickelt, welches die Druckluftbeaufschlagung des zugehörigen Druckluftkanals steuert.

Die Mitnehmereinrichtung, welche sicherstellt, daß der Vereinzelungsschlitten bei einem Hub des Weichenschlittens einen nur halb so großen Hub zurücklegt, weist in vorteilhafter Weiterbildung der Erfindung einen von einem der Schlitten in eine Aussparung des anderen Schlittens vorstehenden Mitnehmervorsprung auf, wobei die in Verschiebungsrichtung gemessene Breite der Ausnehmung um das halbe Maß des Hubes des Weichenschlittens größer als die in Verschiebungsrichtung gemessene Breite des Mitnehmervorsprungs ist. Vorzugsweise ist der Mitnehmervorsprung am Weichenschlitten vorgesehen, d.h. er tritt von der Unterseite des Weichenschlittens in die dann in der Oberseite des plattenförmigen Vereinzelungsschlittens vorgesehene Aussparung vor.

Die Vorrichtung als Ganzes ist in vorteilhafter Weiterbildung der Erfindung so aufgebaut, daß das Verteilerstück zwischen zwei seitlichen Halterungsplatten eingesetzt gehalten ist, welche das Verteilerstück an der Unter- und der Rückseite überragen, und daß in den das Verteilerstück an der Rückseite überragenden Bereichen der Halterungsplatten parallel zur Schlitten-Verschiebungsrichtung verlaufende Führungsstangen gehaltert sind, welche vorzugsweise mit Führungsbüchsen versehene Führungsbohrungen in einem mit dem Vereinzelungsschlitten verbundenen Führungskörper durchsetzen.

Es ist dann auch möglich, die beiden Annäherungsschalter jeweils in einer Bohrung in jeweils einer der Halterungsplatten in Schlitten-Verschiebungsrichtung einstellbar zu befestigen.

Des weiteren kann in jeder Halterungsplatte in Ausrichtung zum Führungskörper eine Gewindebohrung vorgesehen sein, in welche der Gewindeschaft einer als verstellbarer Anschlag für den Verschiebungsweg des Führungskörpers dienenden Schraube eingeschraubt ist, die gegen ungewollte Verstellung zweckmäßig durch eine Kontermutter gesichert wird. Über diese Schrauben läßt sich also die genaue Ausrichtung der Durchgangsbohrung im Weichenschlitten mit dem zugeordneten Einlaufschlitz im Vereinzelungsschlitten und dem zugeordneten Druckluftkanal in der jeweiligen Hubendstellung einstellen.

Die Erfindung ist in der folgenden Beschreibung eines Ausführungsbeispiels in Verbindung mit der Zeichnung näher erläutert, und zwar zeigt:

Fig. 1 eine Seitenansicht eines Ausführungsbeispiels der erfindungsgemäßen Vorrichtung;

Fig. 2 eine Draufsicht auf die Vorrichtung, gesehen in Richtung des Pfeils 2 in Figur 1;

Fig. 3 eine Vorderansicht der Vorrichtung, gesehen in Richtung des Pfeils 3 in Figur 1;

Fig. 4 eine Schnittansicht durch die Funktionsteile der Vereinzelungs-Vorrichtung, gesehen in Richtung der Pfeile 4-4 in Figur 2;

Fig. 5 eine Schnittansicht, gesehen in Richtung der Pfeile 5-5 in Figur 4;

Fig. 6 eine Draufsicht auf den Weichenschlitten und den zugeordneten Vereinzelungsschlitten, gesehen in Richtung des Pfeils 6 in Figur 4;

Fig. 7 eine Draufsicht auf den Vereinzelungsschlitten der in den Figuren 1 bis 3 gezeigten Vorrichtung; und

Fig. 8 eine Seitenansicht des in Figur 7 dargestellten Schlittens.

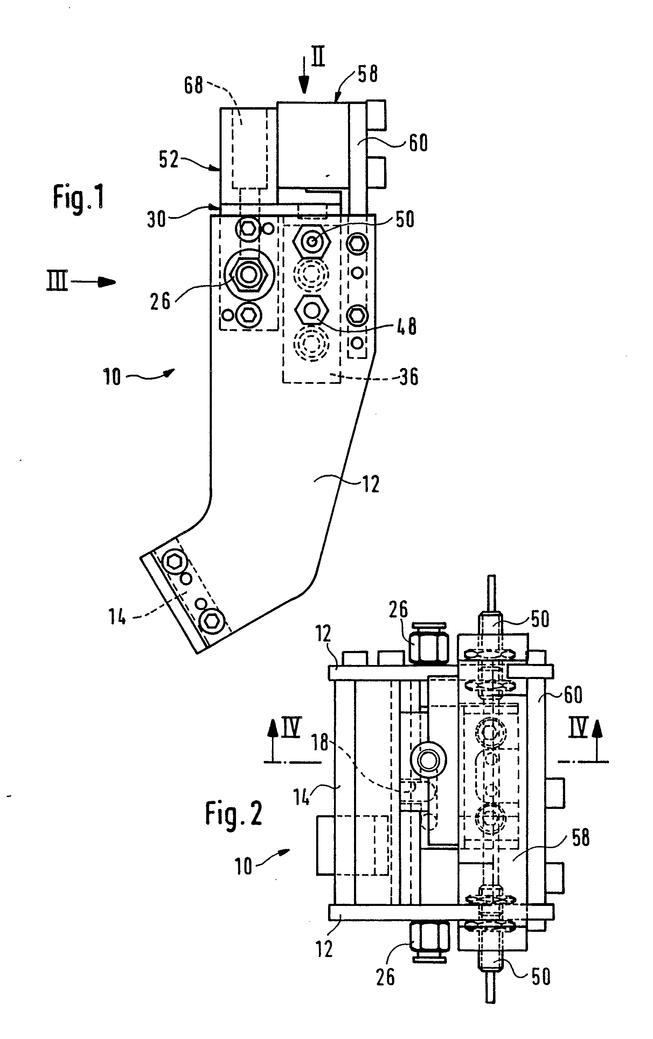

Das in den Figuren 1 bis 3 gezeigte, in seiner Gesamtheit mit 10 bezeichnete Ausführungsbeispiel einer in der erfindungsgemäßen Weise ausgestalteten Vorrichtung zur Vereinzelung von Kopfbolzen und Überführung der vereinzelten Bolzen in eine nachgeschaltete pneumatische Förderlinie ist im speziellen Fall zum nachgeschalteten Einsatz einer (nicht gezeigten) als Schrägrutsche ausgebildeten Fördereinrichtung gedacht, in welcher die beispielsweise von Anschweißschrauben gebildeten Kopfbolzen zwischen zwei etwa entsprechend dem Außendurchmesser des Bolzenschafts parallel beabstandeten schrägen Schienen zugeführt werden, wobei ihre Köpfe auf den oberen Stirnflächen der Schienen gehalten sind. Die im folgenden noch näher beschriebenen Funktionsteile der Vorrichtung 10 werden von zwei seitlich beabstandeten Halterungsplatten 12 getragen, welche an ihrem unteren Ende der Neigung der Schrägrutsche entsprechend abgewinkelt und durch eine mit entsprechender Neigung zwischen ihnen verschraubte Bodenplatte 14 an einer senkrechten Montagefläche befestigbar sind. In der Einbaulage ist die Vorrichtung also in Figur 1 so nach rechts geneigt zu denken, daß die Flachseiten der Bodenplatte 14 senkrecht stehen.

Im oberen Bereich sind die Halterungsplatten 12 durch ein zwischen ihnen verschraubtes prismatisches Verteilerstück 16 verbunden, welches in seiner der Schrägrutsche zugewandten, d.h. in den Figuren 1, 4 und 5 links gelegenen Fläche einen zur Schrägrutsche ausgerichteten Einlaßschlitz 18 aufweist, welcher so bemessen ist, daß der jeweils vorderste Kopfbolzen aus der Schrägrutsche in das Verteilerstück 16 eintreten kann, d.h. der Einlaßschlitz 18 hat über den größten Teil seiner Länge eine etwa dem Durchmesser des Bolzenschafts entsprechende Breite und ist nur in seinem oberen Endbereich entsprechend dem Durchmesser und der Höhe des Bolzenkopfs etwas verbreitert, wodurch -bündig mit den oberen Stirnflächen der Schienen der Schrägrutsche - Auflageflächen für die Bolzenkopf-Unterseite entstehen. Der Einlaßschlitz 18 mündet mittig in einen rechtwinklig zu ihm verlaufenden und an der Oberseite - ebenso wie der Einlaßschlitz 18 - offenen Verteilerschlitz 20, dessen Breite wiederum so bemessen ist, daß die Bolzenschäfte der zu vereinzelnden und weiter zu fördernden Kopfbolzen in seine Endbereiche verschiebbar sind. In diesen Endbereichen mündet jeweils im Boden des Verteilerschlitzes ein Druckluftkanal 22, die über je eine zugeordnete Querbohrung 24 über eine jeweils durch die Halterungsplatten 12 hindurchgeschraubte Anschlußarmatur 26 aus (nicht gezeigten) Druckluftleitungen mit Druckluft beaufschlagbar sind.

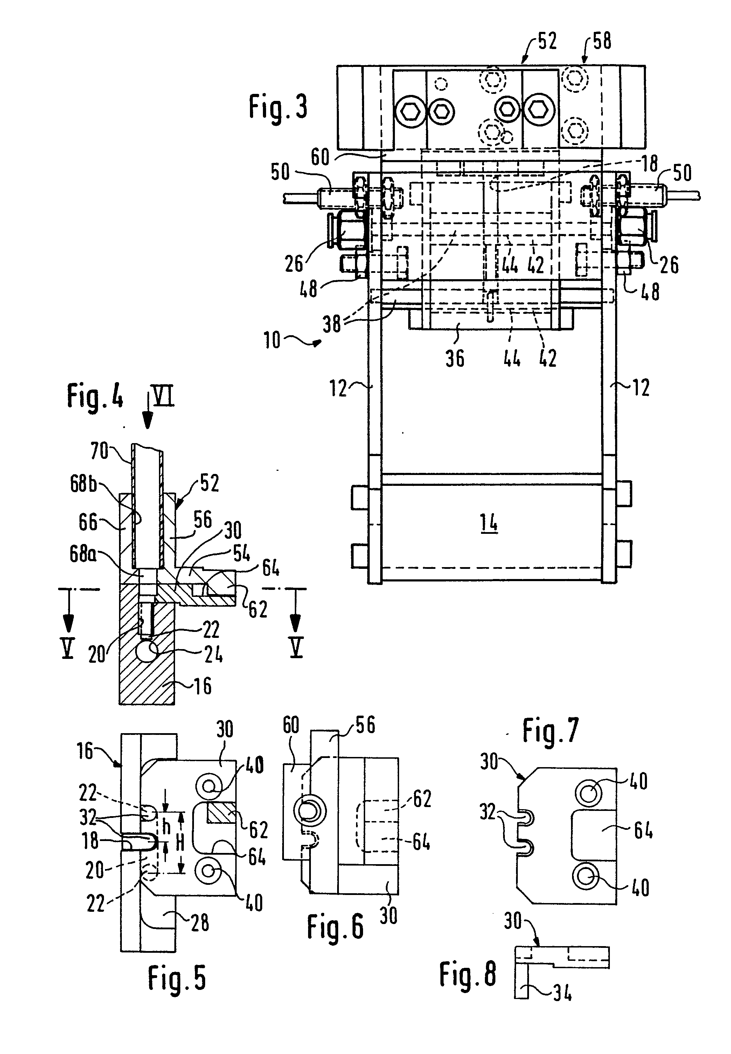

Die Oberseite des prismatischen Verteilerstücks 16 ist im Bereich über dem Verteilerschlitz 20 bis zur rückwärtigen, einlaßschlitzabgewandten senkrechten Fläche mit einer Einsenkung 28 (Figur 5) versehen, in welche ein plattenförmiger Vereinzelungsschlitten 30 eingesetzt ist, dessen Dicke der Tiefe der Einsenkung 28 entspricht, so daß seine flache Oberseite bündig mit dem nicht eigesenkten vorderen Bereich der Oberseite des Verteilerstücks 16 abschließt. In Richtung der Längserstreckung des Vereinzelungsschlittens 30 ist die Einsenkung 28 breiter als der Vereinzelungsschlitten bemessen, so daß dieser also innerhalb der Einsenkung in Richtung des Verteilerschlitzes 20 querverschieblich ist. In der dem Einlaßschlitz 18 zugewandten Stirnseite ist der Vereinzelungsschlitten 30 mit zwei Einlaufschlitzen 32 (Figur 5) versehen, deren Abstand h gleich dem halben Abstand H ist, welcher den Mittenabstand der Mündungen der Druckluftkanäle 22 voneinander bezeichnet. Die Einlaufschlitze 32 sind durch Querverschiebung des Vereinzelungsschlittens 30 abwechselnd mit dem Einlaßschlitz 18 des Verteilerstücks ausrichtbar, wobei der jeweils nicht mit dem Einlaßschlitz ausgerichtete Einlaufschlitz dann bündig oberhalb eines im Boden des Verteilerschlitzes 20 mündenden Druckluftkanals 22 steht. Die an ihrem mündungsabgewandten inneren Ende entsprechend dem Durchmesser des Bolzenschafts der zu vereinzelnden Kopfbolzen ausgerundeten Einlaufschlitze weisen eine der Breite des Einlaßschlitzes 18 des Verteilerstücks 16 entsprechende Breite auf und sind in ihrem oberen Bereich entsprechend dem Durchmesser und der Höhe des Kopfs der zu verarbeitenden Kopfbolzen vergrößert, so daß also ein in den Einlaßschlitz 18 eintretender Kopfbolzen 18 in einen mit dem Einlaßschlitz 18 ausgerichteten Einlaufschlitz 32 übertreten kann. Im Bereich zwischen den beiden Einlaufschlitzen 32 tritt von der Unterseite des Vereinzelungsschlittens 30 ein Vorsprung 34 (Figur 8) vor, dessen Länge gleich der Tiefe und dessen Breite gleich der Breite des Verteilerschlitzes 20 ist. Der Vorsprung 34 bildet im Verteilerschlitz also zwei im wesentlichen dicht gegeneinander abgeschlossene größenveränderliche Räume, in welche jeweils einer der Druckluftkanäle 22 mündet.

Der Vereinzelungsschlitten 30 steht rückseitig über das Verteilerstück 16 vor und ist in diesem überstehenden Bereich auf der Oberseite eines prismatischen Führungskörpers 36 aufgeschraubt, welcher seinerseits auf parallel zum Verteilerschlitz 20 und mit Abstand voneinander zwischen den Halterungsplatten 12 querverlaufend angeordneten Führungsstangen 38 hin- und herverschieblich gelagert ist. Die Befestigung des Vereinzelungsschlittens 30 auf dem Führungskörper 36 erfolgt durch (nicht gezeigte) Befestigungsschrauben, welche die in Figur 5 und 7 erkennbaren angesenkten Bohrungen 40 im Vereinzelungsschlitten 30 durchgreifen.

Zur Erzielung einer spielfreien Gleitführung des Vereinzelungsschlittens 30 auf dem Verteilerstück 16 durchsetzen die Führungsstangen 38 mit Führungs- oder Gleitbüchsen 42 ausgebüchste Querbohrungen 44 im Führungskörper 36.

Im Bereich zwischen den Führungsstangen 38 sind - mit ihren Köpfen aufeinander zu weisend - Kopfschrauben 46 in Gewindebohrungen in den Halterungsplatten 12 eingeschraubt, welche als die Querverschiebung des Führungskörpers 38 und somit des Vereinzelungsschlittens 30 begrenzende einstellbare Anschläge dienen, die ihrerseits durch jeweils eine auf das freie Ende ihrer Gewindeschäfte bis in feste Anlage an die Außenflächen der Halterungsplatten 12 angeschraubte Kontermuttern 48 in der vorgeschriebenen Anschlagstellung gesichert sind.

Oberhalb der oberen Führungsstange 38 ist - ebenfalls in Ausrichtung zum Führungskörper 36 - in je einer Bohrung in jeder Halterungsplatte 12 je ein elektrischer Annäherungsschalter 50 in Verschiebungsrichtung des Führungskörpers verstellbar eingesetzt, welche bei Annäherung des Führungskörpers 38 an seine jeweils zugeordnete Hubendstellung ein elektrisches Signal entwickeln, durch welches ein jeweils in die Zuleitung zu den Druckluftkanälen 22 eingeschaltetes (nicht gezeigtes) Absperrorgan geöffnet wird, welches dann schlagartig Druckluft aus einer Druckluftquelle in den zugehörigen Druckluftkanal 22 im Verteilerstück 16 übertreten läßt.

Auf der Oberseite des Vereinzelungsschlittens 30 und dem mit dieser in einer Ebene liegenden Abschnitt der Oberseite der Verteilerstücks 16 ist die ebenflächige Unterseite eines Weichenschlittens 52 aufgesetzt, der in gleicher Richtung, jedoch um den doppelten Hub H wie der Vereinzelungsschlitten in entgegengesetzte Richtungen querverschieblich ist. Zu diesem Zweck weist der Weichenschlitten 52 einen von seiner plattenförmigen Basis 54 rechtwinklig nach oben vorspringenden Wandabschnitt 56 auf, dessen rückwärts gewandte Flachseite mit dem verschiebbaren Betätigungsorgan einer doppelt wirkenden pneumatischen Kolben-Zylinder-Einheit 58 verbunden ist, deren feststehendes Zylindergehäuse andererseits mit einer querverlaufenden senkrechten Platte 60 verschraubt ist, die ihrerseits hinter dem Führungskörper 36 zwischen den Halterungsplatten 12 starr befestigt ist. Im gezeigten Fall ist die Platte 16 mit den Halterungsplatten 12 verschraubt. Es ist nunmehr ersichtlich, daß der Weichenschlitten 52 durch Betätigung der Kolben-Zylinder-Einheit 58 relativ zur Oberseite des Verteilerstücks 16 hin- und herverschieblich ist. Der Weichenschlitten 52 und der Vereinzelungsschlitten 30 sind dabei mittels einer Mitnehmereinrichtung derart gekoppelt, daß eine Mitnahme des Vereinzelungsschlittens jeweils nur während der zweiten Hälfte des Hubes H des Weichenschlittens erfolgt, so daß der Vereinzelungsschlitten 30 also bei jedem Hub H des Weichenschlittens 52 also nur den halben Hub h ausführt. Diese Mitnehmereinrichtung wird von einem von der Unterseite der plattenförmigen Basis 54 des Weichenschlittens 52 vorstehenden Mitnehmervorsprung 52 gebildet, welcher in eine Aussparung 64 in der Oberseite des Vereinzelungsschlittens 30 eingreift, wobei die in Hubrichtung der Schlitten gemessene Breite der Aussparung 64 um das Maß des halben Hubes des Weichenschlittens größer als die in dieser Richtung gemessene Breite des Mitnehmervorsprungs 62 ist. Auf die Vorderseite des Wandabschnitts 56 des Weichenschlittens 52 ist ein gesonderter senkrechter Wandabschnitt 66 aufgeschraubt. Mittig durch die Trennebene der beiden Wandabschnitte ist eine senkrechte Durchgangsbohrung 68 geführt, die in ihrem unteren, an den Vereinzelungsschlitten 30 und das Verteilerstück 16 anschließenden Abschnitt 68a einen Durchlaßquerschnitt aufweist, der etwas größer als der Durchmesser des Kopfs der zu vereinzelnden Kopfbolzen ist, während der darüber liegende Abschnitt 68b einen größeren lichten Querschnitt aufweist. In diesen Abschnitt 68b größeren Querschnitts ist das eine Ende eines flexiblen Förderschlauchs 70 eingeklemmt, dessen lichter Innendurchmesser wiederum dem Innendurchmesser des Abschnitts 68a entspricht. Der flexible Förderschlauch führt zum Montagewerkzeug, in welchem die vereinzelten Kopfbolzen dann weiterverarbeitet werden. Da die erfindungsgemäße Vorrichtung - wie erwähnt - im vorliegenden Fall zur Vereinzelung von Anschweißschrauben dienen soll, werden die zum Montagewerkzeug geführten Schrauben dann mit der freien Stirnfläche des Schraubenkopfs auf einer metallischen Unterlage verschweißt, indem der Kopf auf diese Unterlage aufgedrückt und dann ein Schweißstrom hinreichender Stärke durch den Schraubenkopf und die Unterlage geschickt wird.

Die beschriebene Vorrichtung arbeitet wie folgt:

Die über einen Förderer aufeinanderfolgend zugeführten, zu vereinzelnden Kopfbolzen treten zunächst einzeln in den Einlaßschlitz 18 im Verteilerstück 16 ein und dann weiter in den jeweils gerade mit dem Einlaßschlitz ausgerichteten Einlaufschlitz 32 im Vereinzelungsschlitten 30. Durch Betätigung der pneumatischen Kolben-Zylinder-Einheit 58 wird der Weichenschlitten 52 aus einer Endstellung in die andere Endstellung quer zum Einlaßschlitz 18 verschoben, wobei er den Vereinzelungsschlitten 30 und damit auch den im Einlaufschlitz 32 befindlichen Kopfbolzen während der zweiten Hälfte seines Hubes mitnimmt. Dadurch gelangt der im Einlaufschlitz 32 befindliche Kopfbolzen in eine Stellung, in welcher er mit dem an diesem Ende des Verteilerschlitzes 20 befindlichen Druckluftkanal 22 ausgerichtet ist. Gleichzeitig ist aber auch die Durchgangsbohrung 58 im Weichenschlitten 52 mit dem Kopfbolzen ausgerichtet. Ein bei Annäherung des Vereinzelungsschlittens 30 an seine Hubendstellung vom zugeordneten Annäherungsschalter 50 ausgelöstes elektrisches Signal öffnet dann also das in der dem zugeordneten Druckluftkanal 22 vorgeschalteten Leitung vorgesehene Absperrorgan, so daß schlagartig Druckluft über diesen Druckluftkanal 22 eintritt und den Kopfbolzen durch die Durchgangsbohrung 68 in den flexiblen Förderschlauch 70 und durch diesen dann zum Montagewerkzeug treibt.

Während der beschriebenen Vorgänge ist der zweite Einlaufschlitz 32 des Vereinzelungsschlittens 30 mit dem Einlaufschlitz 18 des Verteilerstücks 18 ausgerichtet, so daß bereits der nächstfolgende Kopfbolzen in den zweiten Einlaufschlitz 32 eingetreten ist. Durch Beaufschlagung der pneumatischen Kolben-Zylinder-Einheit 58 in entgegengesetzte Richtung werden die beschriebenen Verschiebungen des Weichenschlittens 52 und des Vereinzelungsschlittens 30 in entgegengesetzter Richtung wiederholt, wodurch der zweite Kopfbolzen in Ausrichtung zu dem am anderen Ende des Verteilerschlitzes 20 befindlichen zweiten Druckluftkanal geführt und dort durch einen mittels des zugehörigen Annäherungsschalters ausgelösten Druckluftstoß in den Förderschlauch 70 zum Montagewerkzeug geschossen. Durch erneute Umsteuerung der Kolben-Zylinder-Einheit wird dann wiederum der nächstfolgende Kopfbolzen vereinzelt und zum Montagewerkzeug geführt. Da hierbei jeweils der nächstfolgende Kopfbolzen bereits in die Vorrichtung eingeführt und sozusagen für den nächstfolgenden Schuß in Bereitschaft steht, wird die angestrebte hohe Taktfrequenz erzielt.

## Ansprüche

1. Vorrichtung zur Vereinzelung von aus einem Vorrat über eine Fördereinrichtung aufeinanderfolgend ausgerichtet zugeführten Kopfbolzen und zur Verteilung in den Einlaß einer nachgeschalteten pneumatischen Förderlinie, in welcher die Kopfbolzen einzeln in die Aufnahme eines zugeordneten Montagewerkzeugs überführt werden, gekennzeichnet durch ein der Fördereinrichtung nachgeschaltetes starres Verteilerstück (16) mit einem Einlaßschlitz (18) für die zugeführten Kopfbolzen, welcher so bemessen ist, daß jeweils nur ein Kopfbolzen hindurchzutreten vermag, und der mittig in einen querverlaufenden, nur an der Oberseite offenen Verteilerschlitz (20) führt, in dessen gegenüberliegenden Endbereichen bodenseitig Druckluftkanäle (22) in einem vorgegebenen Abstand (H) münden, die abwechselnd gesteuert mit einer Druckluftquelle verbindbar sind, einen auf der Oberseite des Verteilerstücks (16) querverschieblich geführten plattenförmigen Vereinzelungsschlitten (30) mit zwei in Verschiebungsrichtung um das halbe Maß (H/2 = h) des vorgegebenen Abstands (H) zueinander versetzten, abwechselnd mit dem Einlaßschlitz (18) ausrichtbaren Einlaufschlitzen (32), in welche bei Ausrichtung mit dem Einlaßschlitz (18) jeweils ein Kopfbolzen übertritt, wobei der Vereinzelungsschlitten (30) einen im Bereich zwischen den Einlaufschlitzen (32) von seiner Unterseite in den querverlaufenden Verteilerschlitz (20) vortretenden und ihn in zwei im wesentlichen dicht gegeneinander abgeschlossene größenveränderliche Räume unterteilenden Vorsprung (34) aufweist, und durch einen auf dem Verteilerstück (16) und dem Vereinzelungsschlitten (30) um einen dem vorgegebenen Abstand (H) entsprechenden Hub querverschieblich aufgesetzten, durch eine Betätigungseinheit hin- und herbeweglichen Weichenschlitten (52) mit einer am Ende der Querhübe jeweils mit einem der Druckluftkanäle (22) im Boden des Verteilerschlitzes (20) ausgerichteten Durchgangsbohrung, deren lichter Durchlaßquerschnitt nur geringfügig größer als der Kopfdurchmesser der zu vereinzelnden Kopfbolzen ist und an welcher auf der vereinzelungsschlittenabgewandten Seite ein Ende eines elastischen Förderschlauchs (70) angeschlossen ist, dessen anderes Ende zum Montagewerkzeug geführt ist, wobei der Vereinzelungsschlitten (30) und der Weichenschlitten durch eine Mitnehmereinrichtung gekoppelt sind, welche jeweils nur während der zweiten Hälfte des Hubes des Weichenschlittens (52) wirksam ist.

2. Vorrichtung nach Anspruch 1, dadurch gekennzeichnet, daß der plattenförmige Vereinzelungsschlitten (30) auf einer Fläche des Verteilerstücks (16) querverschieblich aufgesetzt ist, welche um das Maß der Dicke des Vereinzelungsschlittens (30) in die Oberseite des Verteilerstücks (16) vertieft eingesenkt (Einsenkung 28) ist, daß der Einlaßschlitz (18) und die Einlaufschlitze (32) jeweils an ihrem oberen Ende einen entsprechend dem gegenüber dem Durchmesser des Bolzenschafts vergrößerten Kopfdurchmesser der Kopfbolzen verbreiterten Schlitzabschnitt aufweisen, dessen Höhe gleich oder etwas größer als die Höhe des Kopfs der zu vereinzelnden Kopfbolzen ist.

3. Vorrichtung nach Anspruch 1 oder 2, dadurch gekennzeichnet, daß die Betätigungs-Einheit eine einerseits am Weichenschlitten (52) und andererseits an einem starr mit dem Verteilerstück (16) verbundenen Bauteil angeschlossene doppelt wirkende pneumatische Kolben-Zylinder-Einheit (58) ist.

4. Vorrichtung nach einem der Ansprüche 1 bis 3, dadurch gekennzeichnet, daß in die die im Boden des Verteilerschlitzes (20) des Verteilerstücks (16) mündenden Druck luftkanäle (22) mit der Druckluftquelle verbindenden Druckluftleitungen je ein im Ausgangszustand in der Schließstellung gehaltene, durch ein elektrisches Signal in die Öffnungsstellung umsteuerbares Absperrorgan eingeschaltet ist, und daß dem Weichenschlitten (52) oder dem Vereinzelungsschlitten (30) in beiden Hubendstellungen je ein Annäherungsschalter (50) zugeordnet ist, der bei Erreichen der jeweiligen Hubendstellung das elektrische Signal für das Absperrorgan entwickelt, welches die Druckluftbeaufschlagung des zugehörigen Druckluftkanals (22) steuert.

5. Vorrichtung nach einem der Ansprüche 1 bis 4, dadurch gekennzeichnet, daß die Mitnehmereinrichtung einen von einem der Schlitten (30; 52) in eine Aussparung (64) des anderen Schlittens vorstehenden Mitnehmervorsprung (62) aufweist, wobei die in Verschiebungsrichtung gemessene Breite der Ausnehmung um das halbe Maß (h) des Hubes (H) des Weichenschlittens (52) größer als die in Verschiebungsrichtung gemessene Breite des Mitnehmervorsprungs (64) ist.

6. Vorrichtung nach Anspruch 5, dadurch gekennzeichnet, daß der Mitnehmervorsprung (62) von der Unterseite des Weichenschlittens (52) in die in der Oberseite des plattenförmigen Vereinzelungsschlittens (30) vorgesehene Aussparung (64) vortritt.

7. Vorrichtung nach einem der Ansprüche 1 bis 6, dadurch gekennzeichnet, daß das Verteilerstück (16) zwischen zwei seitlichen Halterungsplatten (12) eingesetzt gehalten ist, welche das Verteilerstück (16) an der Unter- und der Rückseite überragen, und daß in den das Verteilerstück (16) an der Rückseite überragenden Bereichen der Halterungsplatten (12) parallel zur Schlitten-Verschiebungsrichtung verlaufende Führungsstangen (38) gehaltert sind, welche vorzugsweise mit Führungsbüchsen (42) versehene Führungsbohrungen (44) in einem mit dem Vereinzelungsschlitten (30) verbundenen Führungskörper (36) durchsetzen.

8. Vorrichtung nach Anspruch 4 und 7, dadurch gekennzeichnet, daß die beiden Annäherungsschalter (50) jeweils in einer Bohrung jeweils einer der Halterungsplatten (12) in Schlitten-Verschiebungsrichtung einstellbar befestigt sind.

9. Vorrichtung nach Anspruch 7 oder 8, dadurch gekennzeichnet, daß in jeder Halterungsplatte (12) in Ausrichtung zum Führungskörper (36) eine Gewindebohrung vorgesehen ist, in welche der Gewindeschaft einer als verstellbarer Anschlag für den Verschiebungsweg des Führungskörpers (36) dienenden Schraube (46) eingeschraubt ist.

10. Vorrichtung nach Anspruch 9, dadurch gekennzeichnet, daß die Gewindeschäfte der als Anschlag für den Führungskörper (36) dienenden Schrauben (46) durch eine Kontermutter (48) gegen ungewollte Verstellung gesichert sind.

Fig.1

Fig.2

Fig. 3

Fig. 4

Fig. 5

Fig. 6

Fig. 7

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 200 085 (MATSUSHITA) <br> * Insgesamt * <br> --- | 1 | B 23 P 19/00 <br> B 65 G 47/06 // <br> B 23 K 11/32 |
| A | US-A-3 583 599 (TRW INC.) <br> * Figuren * <br> --- | 1 | |
| A | PATENT ABSTRACTS OF JAPAN, Band 3, Nr. 126 (M-77), 20. Oktober 1979, Seite 66 M 77; & JP-A-54 102 669 (YAMAHA HATSUDOKI K.K.) 13-08-1979 <br> ----- | 1 | |

|  | RECHERCHIERTE SACHGEBIETE (Int. Cl.4) |
|---|---|
| | B 23 P <br> B 25 B <br> B 23 K <br> B 65 G <br> B 27 F <br> B 21 J |

Der vorliegende Recherchenbericht wurde für alle Patentansprüche erstellt

| Recherchenort | Abschlußdatum der Recherche | Prüfer |
|---|---|---|
| DEN HAAG | 22-07-1988 | RIS M. |

EPO FORM 1503 03.82 (P0403)